# EUROPEAN PATENT SPECIFICATION

(11) **EP 3 042 263 B1**
(45) Date of publication and mention of the grant of the patent: **24.07.2019**
(21) Application number: 15841962.2
(22) Date of filing: 17.09.2015
(51) Int. Cl.: G06F 1/32, G06F 1/20

(54) **DYNAMIC FREQUENCY SCALING IN MULTI-PROCESSOR SYSTEMS**
DYNAMISCHE FREQUENZSKALIERUNG IN MEHRPROZESSORSYSTEMEN
MISE À L'ÉCHELLE DE FRÉQUENCE DYNAMIQUE DANS DES SYSTÈMES À PROCESSEURS MULTIPLES

(30) Priority: 17.09.2014 US 201462051327 P
(43) Date of publication of application: 13.07.2016
(73) Proprietor: MediaTek Inc., Hsin-Chu 300 (TW)
(72) Inventor: CHANG, Ya-Ting, Hsinchu City 300 (TW); YONG, Lee-Kee, Hsinchu City 300 (TW); CHIU, Shih-Yen, Hsinchu City 300 (TW); LEE, Ming-Hsien, Hsinchu City 300 (TW); CHEN, Jia-Ming, Zhubei City Hsinchu County 302 (TW); LIN, Yu-Ming, Taipei City 114 (TW); CHOU, Hung-Lin, Zhubei City Hsinchu County 302 (TW); LO, Tzu-Jen, New Taipei City 231 (TW); SOON, Koon Woon, Hsinchu City 300 (TW)
(74) Representative: Goddar, Heinz J.
(86) International application number: PCT/CN2015/089855
(87) International publication number: WO 2016/041509

(56) References cited:
- WO-A1-2012/058202
- US-A1- 2006 149 975
- US-A1- 2012 066 535
- US-A1- 2012 159 216
- US-A1- 2013 246 820
- US-A1- 2014 032 010
- US-A1- 2014 132 334

## Description

### CROSS-REFERENCE TO RELATED APPLICATIONS

This application claims the benefit of U.S. Provisional Application No. 62/051,327 filed on September 17, 2014.

### TECHNICAL FIELD

Embodiments of the invention relate to power and performance management in a system with multiple processor cores.

### BACKGROUND

Low-power computing has been growing in importance given the demands of current and emerging mobile devices. To deliver high performance, mobile devices such as smart phones, tablets, and other handheld devices often integrate increasingly advanced technologies at the expense of high power consumption. One approach for enhancing runtime performance is Dynamic Voltage and Frequency Scaling (DVFS), which is a technique that automatically adjusts the operating frequency and voltage of a processor at runtime to boost performance. When the operating frequency and voltage increase, power consumption also increases, as the power consumption of an integrated circuit is proportional to C x V² x F, where C is the transistor capacitance, V is the supply voltage and F is the frequency.

Some modern computer systems have a built-in power management framework to manage the tradeoff between performance and power usage. For example, a computer system may include a power management unit that determines at runtime whether to increase or decrease operating frequency and voltage in order to satisfy system performance requirements or to save power. The power management unit sets the operating frequency and voltage within predetermined upper and lower limits that are typically determined by system developers or manufactures based on experiment data.

Advanced computing systems have commonly adopted the multi-processor architecture to provide high performance. A multi-processor system includes multiple processors (also referred to as central processing units (CPUs), processor cores, or cores) organized as one or more clusters. The demand for high performance and low power in a multi-processor system heightens the need for enhanced power management.

US 2013/0246820 A1 describes an apparatus and method for adjusting power limits for processing nodes. A local thermal design power (TDP) is determined for each of the nodes based on an ambient temperature. If the measured temperature at the nodes exceeds the temperature of the currently applied TDP, the performance of the nodes is throttled.

US 2012/0066535 A1 describes a power management system for a plurality of processor cores. The performance of the processor cores is independently controlled by taking into account an external ambient temperature and the relative physical proximity of the processor cores.

### SUMMARY

The invention can best be summarized by the independent claims. Further aspects of the invention are outlined in the dependent claims. In what follows, embodiments relate only to claimed combinations of features. When the term embodiment is used for describing unclaimed combinations of features, the term has to be understood as referring to examples useful for understanding the present invention.

In one embodiment, a method of a computing system is provided. The method comprises detecting a condition in which a total number of active processor cores within one or more clusters is less than a predetermined number, and an operating frequency of the active processor cores has risen to a specified highest frequency; and obtaining an ambient temperature measurement of the one or more clusters. The method further comprises, upon detecting the condition, increasing the operating frequency above the specified highest frequency based on the ambient temperature measurement while maintaining a same level of supply voltage to the active processor cores.

In another embodiment, a computing system is provided. The computing system comprises one or more clusters including a plurality of processor cores; a temperature sensor to obtain an ambient temperature measurement of the one or more clusters; and a management module coupled to the one or more clusters to detect a condition in which a total number of active processor cores within the one or more clusters is less than a predetermined number, and an operating frequency of the active processor cores has risen to a specified highest frequency. The computing system further comprises a frequency controller coupled to the one or more clusters, the temperature sensor and the management module, which, upon detection of the condition, is operative to increase the operating frequency above the specified highest frequency based on the ambient temperature measurement while maintaining a same level of supply voltage to the active processor cores.

In yet another embodiment, a method of a computing system is provided. The method comprises detecting a condition in which a total number of active processor cores within one or more clusters is less than a predetermined number, and an operating frequency of the active processor cores has risen to a specific frequency, which is any of one or more specified frequencies of a plurality of specified frequencies, wherein the plurality of specified frequencies are configured for all processor cores in the one or more clusters being active; and obtaining an ambient temperature measurement of the one or more clusters. The method further comprises, upon detecting the condition, increasing the operating frequency above the specified frequency based on the ambient temperature measurement while maintaining a same level of supply voltage to the active processor cores.

In yet another embodiment, a computing system is provided. The computing system comprises one or more clusters including a plurality of processor cores; a temperature sensor to obtain an ambient temperature measurement of the one or more clusters; and a management module coupled to the one or more clusters to detect a condition in which a total number of active processor cores within the one or more clusters is less than a predetermined number, and an operating frequency of the active processor cores has risen to a specific frequency, which is any of one or more specified frequencies of a plurality of specified frequencies, wherein the plurality of specified frequencies are configured for all processor cores in the one or more clusters being active. The computing system further comprises a frequency controller coupled to the one or more clusters, the temperature sensor and the management module, which, upon detection of the condition, is operative to increase the operating frequency above the specified frequency based on the ambient temperature measurement while maintaining a same level of supply voltage to the active processor cores.

In the embodiments described herein, the operation frequency of the processor cores is not constrained by the specified highest frequency and/or one or more specified frequencies since these frequencies are generally designed for ensuring a safe operation when all of the processor cores are active. Moreover, the one or more specified frequencies can be surpassed without requiring the level of the supply voltage to the processor cores to be increased. In addition, the operation frequency of the processor cores can be adjusted dynamically based on a real-time detection of ambient temperature, thus preventing overheat or any thermal issues. Furthermore, because the IR drop is greater for a lesser number of active cores, the operation frequency of the processor cores for fewer active processor cores can be adjusted to surpass the specified frequency to a greater extent. Consequently, the processor cores can operate to a full or increased extent of their capabilities and the power resource can be more efficiently utilized while the same level of the supply voltage is maintained.

In yet another embodiment, a method for operating a computing system is provided. The method comprises: detecting a condition in which a total number of active processor cores within one or more clusters is less than a predetermined number, and an operating frequency of the active processor cores has risen to a specific frequency, which is any of one or more specified frequencies of a plurality of specified frequencies, wherein the plurality of specified frequencies are configured for all processor cores in the one or more clusters being active; and obtaining an ambient temperature measurement of the one or more clusters. The method further comprises: when the condition is detected, decreasing a level of supply voltage to the active processor cores based on the ambient temperature measurement while maintaining an operating frequency at the specified frequency.

In yet another embodiment, a computing system is provided. The computing system comprises one or more clusters including a plurality of processor cores; a temperature sensor to obtain an ambient temperature measurement of the one or more clusters; a management module configured to detect a condition in which a total number of active processor cores within the one or more clusters is less than a predetermined number, and an operating frequency of the active processor cores has risen to a specific frequency, which is any of one or more specified frequencies of a plurality of specified frequencies, wherein the plurality of specified frequencies are configured for all processor cores in the one or more clusters being active; and a frequency controller configured to, when the condition is detected, decrease a level of supply voltage to the active processor cores based on the ambient temperature measurement while maintaining an operating frequency at the specified frequency.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
Figure 1 illustrates a multi-processor computing system according to one embodiment.
Figure 2 illustrates a cluster in the computing system of Figure 1.
Figure 3 illustrates a look-up table according to one embodiment.
Figure 4 illustrates a look-up table according to another embodiment.
Figure 5 is a flow diagram illustrating a method for dynamic frequency scaling according to one embodiment.
Figure 6 is a flow diagram illustrating a method for dynamic frequency scaling according to another embodiment.
Figure 7 is a flow diagram illustrating a method for dynamic frequency scaling according to yet another embodiment.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

It should be noted that the term "multi-processor computing system" as used herein is equivalent to a "multi-core processor system," which may be a multi-core system or a multi-processor system, depending upon the actual design. In other words, the proposed method may be employed by any of the multi-core system and the multi-processor system. For example, concerning the multi-core system, all of the processor cores may be disposed in one processor. For another example, concerning the multi-processor system, each of the processor cores may be disposed in one processor. Hence, each of the clusters may be implemented as a group of one or more processors.

Embodiments of the invention provide a system and method for managing power and performance in a multi-processor computing system. The system includes one or more clusters, and each cluster includes one or more processor cores. The processor cores may be CPUs, other types of processors or cores). The operating frequency of the one or more processor cores can be dynamically adjusted during operation in response to varying performance requirements and thermal constraints. Generally, the performance requirement can be quantified by the response time and throughput under a given system workload. In a scenario where system workload can be parallelized and distributed to multiple processor cores, an increase in the workload may cause more processor cores to be turned on to fulfill a performance requirement. However, in a scenario where the system workload cannot be easily parallelized, turning on more processor cores may not help improve performance. Increasing operating frequency, on the other hand, accelerates the processor speed and therefore increases performance with respect to response time and/or throughput.

In one embodiment, the operating frequency can be dynamically increased to above the highest frequency (i.e., the upper limit) specified in a specification. This specified highest frequency may be stored in an Operating Performance Point (OPP) table or other forms of data structure or storage or circuit implementation in the system. Surpassing the specified highest frequency is allowed when the number of active processor cores in one or more clusters of the system is less than a predetermined number, which, in turn, is less than the total number of processor cores in the one or more clusters. As the specified highest frequency is defined for the scenario in which all processor cores are active, the presence of inactive processor cores allows those active processor cores to consume more than their normal shares of power by operating in a frequency higher than the specified highest frequency. In one embodiment, the amount of frequency increase is based on the ambient temperature of the one or more clusters. The allowed amount of frequency increase is smaller under a higher ambient temperature, and is larger under a lower ambient temperature. In another embodiment, the amount of frequency increase is based on the number of active processor cores as well as the ambient temperature of the one or more clusters. The allowed amount of frequency increase is smaller under a higher number of active cores, and is larger under a lower number of active cores.

A target frequency that the operating frequency is to be increased to may be determined according to another or the same OPP table or other forms of data structure or storage in the system that can predetermine or record a plurality of operating frequencies corresponding to different temperatures and/or number of active cores. Alternatively or additionally, the increase of the operating frequency may be achieved by directly implementing corresponding formula that calculates the target frequency in hardware and/or software forms. It is also noted that in one aspect, the operating frequency of active cores (when the number of the active cores is less than a given threshold) may be increased to surpass the specified (highest) frequency by setting different groups of specified (highest) frequencies for different numbers or number ranges of active cores, and/or for different temperatures or temperature ranges.

Additionally or alternatively, the operating frequency originally set to be any of one or more specified frequencies below the specified highest frequency during operation of the multi-processor computing system can be dynamically increased to above the one or more other specified frequencies. Similarly, as these one or more specified frequencies are also defined for the scenario in which all processor cores are active, the presence of inactive processor cores during runtime allows those active processor cores to operate in a frequency higher than the specified frequencies. In other words, the one or more specified frequencies can be surpassed due to an IR drop for the clusters when the number of active processor cores is decreased. In one embodiment, the amount of frequency increase for each of the one or more specified frequency is based on the ambient temperature of the one or more clusters. The allowed amount of frequency increase is smaller under a higher ambient temperature, and is larger under a lower ambient temperature. In another embodiment, the amount of frequency increase for each of the one or more specified frequency is based on the number of active processor cores as well as the ambient temperature of the one or more clusters. The allowed amount of frequency increase is smaller under a higher number of active cores, and is larger under a lower number of active cores.

In the embodiments described herein, the supply voltage to the active processor cores is maintained at the same level before and after the adjustment to the operating frequency, i.e., the same voltage level regardless the number of active cores. This voltage level, which may be referred to as a safety voltage, is designed for the scenarios where all processor cores in the system are active. The presence of one or more inactive processor cores in the system causes an IR drop, which is a form of unused power. Maintaining the supply voltage, rather than increasing or decreasing it with the operating frequency, not only stabilizes the circuit operation but also allows the unused power to be used by the active processor cores (which are less than all) by operating at higher frequencies. Thus, in an embodiment, the operating frequency can be increased such that the increased power consumption due to the increased operating frequency comes from the IR drop caused by having at least one inactive processor core in the one or more clusters. Further details of embodiments of the invention will be provided below.

In one embodiment, the presence of inactive processor cores allows the specified highest frequency to be maintained while the supply voltage to the active processor cores is decreased. As the supply voltage is defined for the scenario in which all processor cores are active, the presence of inactive processor cores allows those active processor cores to operate in the specified highest frequency but with a lower level of the supply voltage. In other words, the level of the supply voltage can be lowered due to an IR drop for the clusters when the number of active processor cores is decreased. In one embodiment, the amount of voltage decrease is based on the ambient temperature of the one or more clusters. The allowed amount of voltage decrease is smaller under a higher ambient temperature, and is larger under a lower ambient temperature. In another embodiment, the amount of voltage decrease is based on the number of active processor cores as well as the ambient temperature of the one or more clusters. The allowed amount of frequency increase is smaller under a higher number of active cores, and is larger under a lower number of active cores.

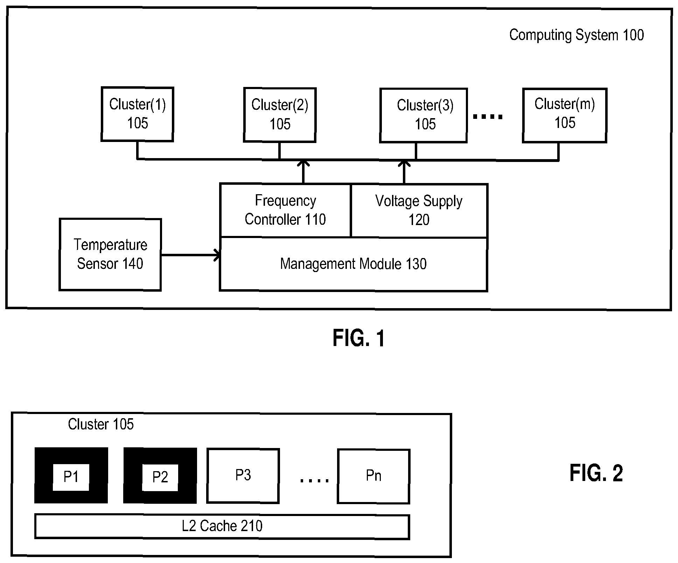

Figure 1 illustrates an example of a computing system 100 according to one embodiment. In this example, the computing system 100 is a multi-processor computing system that includes one or more clusters 105 shown as Cluster(1), Cluster(2), Cluster(3)...., Cluster(m), where m may be any positive integer. Although multiple clusters are shown in Figure 1 and described hereinafter, it is understood that an embodiment of the system 100 may include any number of clusters such as only one cluster (i.e., m = 1). Therefore, unless specifically mentioned otherwise (such as "multiple" or "a plurality of' clusters), the embodiments described hereinafter apply to any number of clusters including one cluster. Each cluster 105 includes one or more processor cores, and different clusters 105 may include the same or different numbers, processor type and/or sizes of processor cores. The system 100 also includes a frequency controller 110 and a voltage supply 120, both of which are controlled by a management module 130. When the management module 130 determines, identifies or calculates an adjustment to the operating frequency, it signals the frequency controller 110 to change the operating frequency. In one embodiment, the voltage supply 120 maintains the same supply voltage to the clusters 105 before and after the adjustment to the operating voltage. In one embodiment, the management module 130 sets the operating frequency for the clusters 105 based on, at least in part, temperature measurements from a temperature sensor 140. The temperature sensor 140 measures the ambient temperature of the clusters 105; e.g., by measuring the temperature of the chip on which the clusters 105 are located.

According to the dynamic frequency scaling to be described herein, the management module 130 is operative to detect a predetermined condition which defines when to increase the operating frequency to surpass the specified highest frequency. The predetermined condition is preferably but not limited to that the total number of active processor cores within the one or more clusters 105 is less than a predetermined number, and an operating frequency of the active processor cores has risen to a specified highest frequency. Upon detection of the condition, the frequency controller 110 is operative to increase the operating frequency above the specified highest frequency based on the ambient temperature measurement while the voltage supply 120 maintaining the same level of supply voltage to the active processor cores.

In one embodiment, the management module 130 has access to a number of specified frequency values for operating the clusters. The terms "specified frequency," "specified highest frequency," "specified frequency values," and the like, refer to frequency values predetermined for operating the clusters 105 in a scenario where all processor cores in the one or more clusters 105 are active. The specified highest frequency is the upper limit for the operating frequency when all processor cores in the one or more clusters 105 are active. The specified frequency values, including the specified highest frequency, may be stored in a table (e.g., an OPP table) or another form of structure accessible to the management module 130. When the performance demand increases, a higher frequency setting may be used as the operating frequency; conversely, when the performance demand decreases, a lower frequency may be used to reduce power consumption. According to the dynamic frequency described herein, when there is a high performance demand, the management module 130 may increase the operating frequency above the specified highest frequency.

Figure 2 illustrates an example of one of the clusters 105 according to one embodiment. The cluster 105 include multiple processor cores, shown as PI, P2, P3,..., Pn, where n may be any positive integer greater than one. During operation, some of the processor cores may be inactive (e.g., P1 and P2 shown in dark blocks) while others may be active (e.g., P3,...,Pn). A processor core is referred to as inactive when it is turned off and/or in a low power state that may consume negligible power. The cluster 105 may also include one or more cache memories, such as a level-2 (L2) cache 210, each accessible to at least one or all of the processor cores in the cluster 105.

The processor cores in the cluster 105 may be of the same processor type, which means that the processor cores have substantially the same characteristics in terms of power consumption and performance. Alternatively, the processor cores in the cluster 105 may be of different processor types, which means that they have different characteristics in terms of power consumption and/or performance. In an embodiment where the system 100 has one or more clusters 105 and the processor cores in all of the clusters 105 have the same processor type, the system 100 is referred to as having a symmetric multiprocessing (SMP) structure. In an alternative embodiment where the processor cores within the same cluster 105 or across different clusters 105 have different processor types, the system 100 is referred to as having a heterogeneous multiprocessing (HMP) structure.

The following describes three exemplary implementations of the system 100 for dynamically scaling the operating frequency in the system according to some embodiments. In a first exemplary implementation, the system 100 has an SMP structure, and the operating frequencies of the clusters 105 are dependent on one another. In this implementation, frequency scaling is applied to all clusters 105 in the system 100 (one cluster if the system 100 has only one cluster) when the management module 130 detects a first condition. According to the dynamic frequency scaling described herein, the first condition occurs when the following is true: (a) the operating frequency of the active processor cores has risen to a specified highest frequency, and (b) the total number of active processor cores in the system 100 is less than a predetermined number. When the first condition is detected, the operating frequency of all clusters 105 in the system 100 can be increased above the specified highest frequency based on the ambient temperature measurement of the clusters 105. The predetermined number in (b) may be any number lower than the total number of processor cores in the system 100. In an alternative embodiment, the specified highest frequency in (a) may be a specified frequency lower than the specified highest frequency. Additionally, the dynamic frequency scaling may be applied to not only the specified highest frequency but also one or more specified frequencies lower than the specified highest frequency.

In a second exemplary implementation, the system 100 has an SMP structure and the operating frequencies of the clusters 105 are independent of one another. In this implementation, frequency scaling is applied to each cluster 105 independently when a second condition is detected. In a third exemplary implementation, the system 100 has an HMP structure in which operating frequencies of the clusters 105 are independent of one another. In this implementation, frequency scaling is also applied to each cluster 105 independently when the second condition is detected. That is, the second condition is used for both the second and the third exemplary implementations. The second and the third exemplary implementations may also be applied to the system 100 that has only one cluster. According to the dynamic frequency scaling described herein, the second condition occurs when the following is true: (a) the operating frequency of a given cluster in the system 100 has reached a specified highest frequency, and (b) the total number of active processor cores in the given cluster is less than a predetermined number. When the second condition is detected, the operating frequency of the given cluster can be increased above the specified highest frequency based on the ambient temperature measurement of the given cluster. The predetermined number in (b) may be any number lower than the total number of processor cores in the given cluster. In an alternative embodiment, the specified highest frequency in (a) may be a specified frequency lower than the specified highest frequency. Additionally, the dynamic frequency scaling may be applied to not only the specified highest frequency but one or more specified frequencies lower than the specified highest frequency.

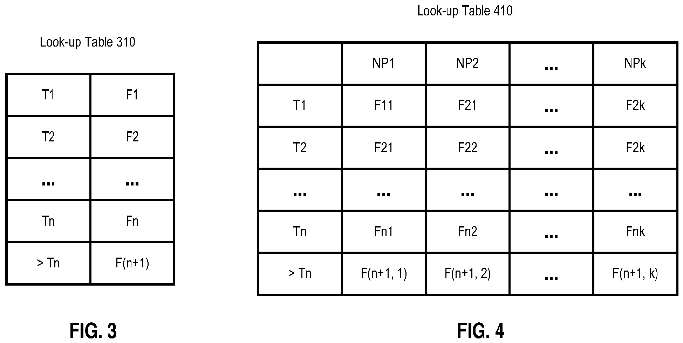

In one embodiment, when the first condition or the second condition is detected, the management module 130 determines a target frequency for increasing the operating frequency using a look-up table. The look-up table can be in any form of data/storage structure and/or implemented in hardware/software forms. Alternatively or additionally, the management module 130 can automatically increase the operating frequency by using corresponding formula for calculating the target frequency that is implemented in associated hardware and/or software. Figure 3 illustrates one embodiment of a look-up table 310, which may be stored in memory in the management module 130 or otherwise accessible to the management module 130. In one embodiment, the table 310 contains a list of frequency values indexed by temperatures (represented by T1, ..., Tn). Each temperature value in the table 310 may represent a temperature range. For example, row 1 of the table 310 contains T1 and F1, which means that for temperature less than or equal to T1, the operating frequency can be increased to F1. Row 2 contains T2 and F2, which means that for temperature less than or equal to T2 (and greater than T1), the operating frequency can be increased to F2, where T2 > T1 and F2 < F1. If the temperature is greater than Tn (which is the largest temperature value in the table 310), the operating frequency can be increased to F(n+1). The contents of the other rows of the table 310 can be similarly understood. In one embodiment, all of the frequency values in the table 310 are higher than the specified highest frequency. In one embodiment the ambient temperature measurement made by the temperature sensor 140 of Figure 1 can be used as an estimate of the temperature for the purpose of using the look-up table. The look-up table may be used in any of the first, second or third exemplary implementations described above.

When a frequency is identified in the table 310, the operating frequency of the one or more clusters in the system 100 may be increased to the identified frequency in one step, or alternatively, in multiple steps. The frequency values for each of the multiple steps may be stored in the table 310 or in a separate data structure accessible to the management module 130. Alternatively, the frequency values for each of the multiple steps may be calculated by the management module 130 as a fixed incremental amount or a fixed percentage increase.

Figure 4 illustrates another embodiment of a look-up table 410, which may be stored in memory in the management module 130 or otherwise accessible to the management module 130. In one embodiment, the table 410 contains a list of frequency values with rows indexed by temperatures (represented by T1, ..., Tn) and columns indexed the number of active processor cores (represented by NP1,....NPk). Each temperature value in the table 410 represents a temperature range. The values of NP1,....NPk may be consecutive or non-consecutive integers. For example, if NP1 = 1 and NP2 = 3, the column of NP2 represents the cases where the number of active processor cores is two or three. For the aforementioned first exemplary implementation, the active processor cores in all clusters of the system 100 are counted to obtain the number of active processor cores. For the aforementioned second and third exemplary implementations, the active processor cores in the given cluster (where the second condition is detected) are counted to obtain the number of active processor cores. For example, row 1 column 1 of the table 410 contains F11, which means that for temperature less than or equal to T1 and the number of active processor cores less than or equal to NP1, the operating frequency can be increased to F11. Row 1 column 2 of the table 410 contains F12, which means that for temperature less than or equal to T1 and the number of active processor cores less than or equal to NP2 (and greater than NP1), the operating frequency can be increased to F12, where NP2 > NP1 and F12 < F11. The contents of the other rows and columns of the table 410 can be similarly understood. In one embodiment, all of the frequency values in the table 410 are higher than the specified highest frequency.

In some embodiments, instead of having the same number of columns in each row and the same number of rows in each column as in the table 410, the frequency values may be stored in a data structure that includes multiple tables, with each table for a temperature range. For example, the data structure may include a first table for temperature T ≤ T1 and a second table for T1 < T ≤ T2, and each table defines the frequency values for different number of active processor cores. In some alternative embodiments, each of the multiple tables may be for a different number of active processor cores. For example, the data structure include a first table for NP ≤ 2 and a second table for 2 < NP ≤ 4. Different tables may include the same or different numbers of entries.

When a frequency is identified in the table 410, the operating frequency of the one or more clusters in the system 100 may be increased to the identified frequency in one step, or alternatively, in multiple steps. The frequency values for each of the multiple steps may be stored in the table 410 or in a separate data structure accessible to the management module 130. Alternatively, the frequency values for each of the multiple steps may be calculated by the management module 130 as a fixed incremental amount or a fixed percentage increase.

In yet another embodiment, the management module 130 may calculate the amount of frequency increase by multiplying the current operating frequency by a percentage. For example, the operating frequency may have an 8% increase when T ≤ T1 and a 5% increase when T1 < T ≤ T2. Alternatively, the amount of the percentage increase may be determined based on the number of active processor cores in addition to the ambient temperature measurement.

After a target frequency or an amount of frequency increase is determined and the operating frequency is increased accordingly, the management module 130 may repeatedly reevaluate the condition of the system 100 during runtime to determine whether the first or second condition has changed, whether the temperature has changed, whether the number of active cores has changed, or the like. If the re-evaluation result indicates that the operating frequency should be re-adjusted, the management module 130 determines the operating frequency for the active processor cores by accessing stored data or by calculating the amount of frequency adjustment. In one embodiment, the operating frequency may be increased when the temperature is low to meet performance demands, and may be decreased when the temperature is high to reduce power consumption.

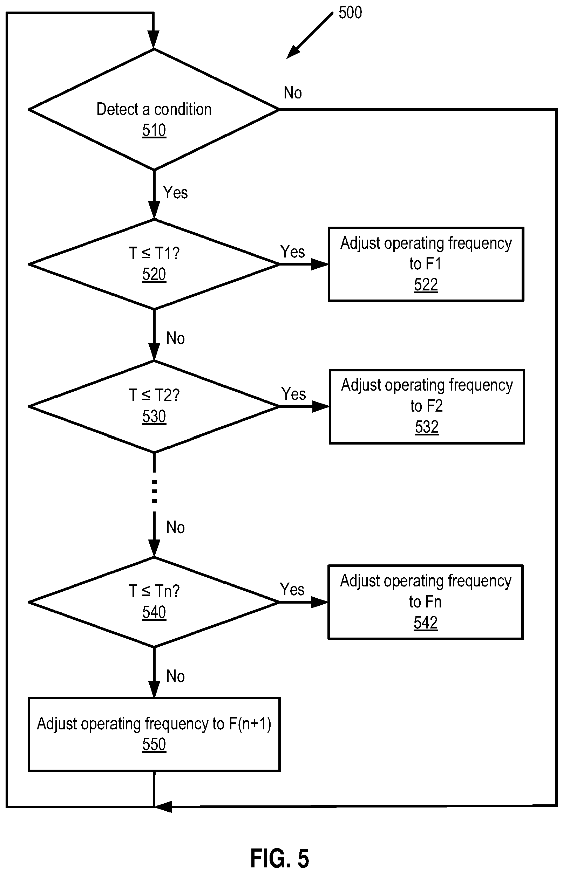

Figure 5 is a flow diagram illustrating a method 500 performed by the system 100 for dynamic frequency scaling according to one embodiment. The method 500 starts at step 510 when the system 100 (more specifically, the management module 130) detects a condition in which the total number of active processor cores within one or more clusters of the system 100 is less than a predetermined number and the operating frequency has risen to a specified highest frequency. For the aforementioned first exemplary implementation, the total number of active processor cores is counted with respect to all clusters in the system 100. For the aforementioned second or third exemplary implementation, the total number of active processor cores is counted with respect to a given cluster in the system 100. In an alternative embodiment, the specified highest frequency in (a) may be a specified frequency lower than the specified highest frequency. Additionally, the method 500 may be applied to not only the specified highest frequency but also one or more specified frequencies lower than the specified highest frequency.

Proceeding to steps 520-540, the management module 130 compares the measured ambient temperature (T) with one or more temperature points to identify a temperature range to which T belongs. It is assumed that the temperatures T1 < T2 < ...< Tn, and the frequencies F1 > F2 > ....> Fn > F(n+1). The higher the temperature is, the lower the operating frequency. When a temperature range is found to include T, the operating frequency is adjusted to the corresponding frequency value. For example, if T ≤ T1, the operating frequency is adjusted to F1 at step 522; if T1 < T ≤ T2, the operating frequency is adjusted to F2 at step 532; if T(n-1) < T ≤ Tn, the operating frequency is adjusted to Fn at step 542. If T is found to exceed Tn, the operating frequency is adjusted to F(n+1) at step 550. In one embodiment, the comparisons may be performed serially as shown in steps 520-540 of Figure 5. In an alternative embodiment, the comparisons may be performed in parallel or in a different order from what is shown in Figure 5.

The method 500 of Figure 5 may be performed continuously, at a fixed time interval, when a condition (e.g., the aforementioned first or second condition) is detected, or when a change (e.g., temperature change) is detected. The operating frequency may be adjusted to increase or decrease, depending on the temperature measurement. Analogous operations may be performed when the number of active processor cores is also taken into account for frequency adjustment. For example, the frequency values F1, F2, ...., Fn, F(n+1) may be different for different number of active processor cores. In one embodiment, the voltage supplied to the active processor cores is maintained at the same level before and after the operating frequency is adjusted.

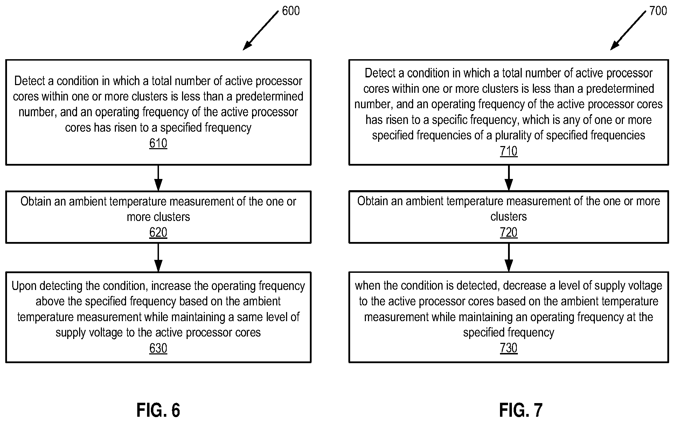

Figure 6 is a flow diagram illustrating a method 600 for operating a computing system using dynamic frequency scaling according to one embodiment. Referring to Figure 6, the method 600 begins with detecting a condition in which a total number of active processor cores within one or more clusters is less than a predetermined number, and an operating frequency of the active processor cores has risen to a specified frequency (block 610); e.g., a specified highest frequency, or any of one or more specified frequencies of a plurality of specified frequencies, wherein the plurality of specified frequencies are configured for all processor cores in the one or more clusters being active. The method 600 further comprises obtaining an ambient temperature measurement of the one or more clusters (block 620). The method 600 further comprises, upon detecting the condition, increasing the operating frequency above the specified frequency based on the ambient temperature measurement while maintaining the same level of supply voltage to the active processor cores (block 630).

Figure 7 is a flow diagram illustrating a method 700 for operating a computing system using dynamic frequency scaling according to one embodiment. Referring to Figure 7, the method 700 begins with detecting a condition, in which a total number of active processor cores within one or more clusters is less than a predetermined number, and an operating frequency of the active processor cores has risen to a specific frequency, which is any of one or more specified frequencies of a plurality of specified frequencies (block 710). The plurality of specified frequencies are configured for all processor cores in the one or more clusters being active. The method 700 further comprises obtaining an ambient temperature measurement of the one or more clusters (block 720); and when the condition is detected, decreasing a level of supply voltage to the active processor cores based on the ambient temperature measurement while maintaining an operating frequency at the specified frequency (block 730).

The methods 600 and 700 may be performed by hardware (e.g., circuitry, dedicated logic, programmable logic, microcode, etc.), software (e.g., instructions run on a processing device), or a combination thereof. In one embodiment, the methods 600 and 700 may be performed by the computing system 100 of Figure 1, or any computing system that includes multiple processor cores. In one embodiment, the computing system 100 may be part of a mobile computing and/or communication device (e.g., a smartphone, a tablet, laptop, etc.).

The operations of the flow diagrams of Figures 5-7 have been described with reference to the exemplary embodiment of Figure 1. However, it should be understood that the operations of the flow diagrams of Figures 5-7 can be performed by embodiments of the invention other than those discussed with reference to Figure 1, and the embodiment discussed with reference to Figure 1 can perform operations different than those discussed with reference to the flow diagrams. While the flow diagrams of Figures 5-7 shows a particular order of operations performed by certain embodiments of the invention, it should be understood that such order is exemplary (e.g., alternative embodiments may perform the operations in a different order, combine certain operations, overlap certain operations, etc.).

Various functional components or blocks have been described herein. As will be appreciated by persons skilled in the art, the functional blocks will preferably be implemented through circuits (either dedicated circuits, or general purpose circuits, which operate under the control of one or more processors and coded instructions), which will typically comprise transistors that are configured in such a way as to control the operation of the circuity in accordance with the functions and operations described herein. The specific structure or interconnections of the transistors may be determined by a compiler, such as a register transfer language (RTL) compiler. RTL compilers operate upon scripts that closely resemble assembly language code, to compile the script into a form that is used for the layout or fabrication of the ultimate circuitry. RTL is well known for its role and use in the facilitation of the design process of electronic and digital systems.

In the embodiments described herein, the operation frequency of the processor cores is not constrained by the specified highest frequency and/or one or more specified frequencies since these frequencies are generally designed for ensuring a safe operation when all of the processor cores are active. Moreover, the one or more specified frequencies can be surpassed without requiring the level of the supply voltage to the processor cores to be increased. In addition, the operation frequency of the processor cores can be adjusted dynamically based on a real-time detection of ambient temperature, thus preventing overheat or any thermal issues. Furthermore, because the IR drop is greater for a lesser number of active cores, the operation frequency of the processor cores for fewer active processor cores can be adjusted to surpass the specified frequency to a greater extent. Consequently, the processor cores can operate to a full or increased extent of their capabilities and the power resource can be more efficiently utilized when the same level of the supply voltage is maintained.

While the invention has been described in terms of several embodiments, those skilled in the art will recognize that the invention is not limited to the embodiments described, and can be practiced with modification and alteration within the scope of the appended claims. The description is thus to be regarded as illustrative instead of limiting.

## Claims

1. A method for operating a computing system (100) having one or more clusters (105), each cluster (105) including one or more processor cores (P1-Pn), comprising:
detecting a condition in which a total number of active processor cores (P3-Pn) within the one or more clusters (105) is less than a predetermined number, and an operating frequency of the active processor cores (P3-Pn) has risen to a specified frequency;
obtaining an ambient temperature measurement of the one or more clusters (105); and
upon detecting the condition, increasing the operating frequency above the specified frequency based on the ambient temperature measurement while maintaining a same level of supply voltage to the active processor cores (P3-Pn);
wherein increasing the operating frequency further comprises increasing the operating frequency such that increased power consumption due to the increased operating frequency comes from IR drop caused by having at least one inactive processor core (P1, P2) in the one or more clusters (105),
wherein
- the total number of active processor cores (P3-Pn) belongs to one cluster (105), and the predetermined number is not greater than a total number of processor cores (P1-Pn) in the one cluster (105); or
- the active processor cores (P3-Pn) belong to a plurality of clusters (105) in the computing system (100), and the predetermined number is not greater than a total number of processor cores (P1-Pn) in the computing system (100).

2. The method of claim 1, wherein increasing the operating frequency is further based on the total number of active processor cores (P3-Pn) within the one or more clusters (105).

3. The method of claim 1 or 2, wherein the specified frequency is a predetermined upper limit for the operating frequency when all processor cores (P1-Pn) in the one or more clusters (105) are active.

4. The method of one of the preceding claims, further comprising:
identifying one or more frequencies (F1-(>Fn)) higher than the specified frequency from a look-up table (310, 410) based on the ambient temperature measurement; and
operating the active processor cores (P3-Pn) at the one or more frequencies (F1-(>Fn)).

5. The method of claim 4, wherein identifying the one or more frequencies (F1-(>Fn)) is further based on the total number of active processor cores (P3-Pn) within the one or more clusters (105).

6. The method of one of the preceding claims, wherein increasing the operating frequency further comprises:
identifying a temperature range to which the ambient temperature measurement belongs; and
operating the active processor core (P3-Pn) at a frequency corresponding to the temperature range.

7. The method of one of the preceding claims, further comprising:
calculating an amount of frequency increase based on the ambient temperature measurement; and
increasing the operating frequency by the amount of frequency increase.

8. The method of one of the preceding claims, wherein the specified frequency is any of one or more specified frequencies of a plurality of specified frequencies, wherein the plurality of specified frequencies are configured for all processor cores (P1-Pn) in the one or more clusters (105) being active.

9. The method of claim 8, wherein the specified frequency is a highest specified frequency of the plurality of specified frequencies.

10. A computing system (100) comprising:
one or more clusters (105) including a plurality of processor cores (P1-Pn);
a temperature sensor (140) to obtain an ambient temperature measurement of the one or more clusters (105);
a management module (130) coupled to the one or more clusters (105) to detect a condition in which a total number of active processor cores (P3-Pn) within the one or more clusters (105) is less than a predetermined number, and an operating frequency of the active processor cores (P3-Pn) has risen to a specified frequency; and
a frequency controller (110) coupled to the one or more clusters (105), the temperature sensor (140) and the management module (130), which, upon detection of the condition, is operative to increase the operating frequency above the specified frequency based on the ambient temperature measurement while maintaining a same level of supply voltage to the active processor cores (P3-Pn),
wherein increasing the operating frequency such that increased power consumption due to the increased operating frequency comes from IR drop caused by having at least one inactive processor core (Pi, P2) in the one or more clusters (105),
wherein
- the total number of active processor cores (P3-Pn) belongs to one cluster (105), and the predetermined number is not greater than a total number of processor cores (P1-Pn) in the one cluster (105); or
- the active processor cores (P3-Pn) belong to a plurality of clusters (105) in the computing system (100), and the predetermined number is not greater than a total number of processor cores (P1-Pn) in the computing system (100).

11. The system of claim 10, wherein the frequency controller (110) is operative to perform the method of one of claims 2 to 8.

12. The system of claim 10 or 11,
wherein the total number of active processor cores (P3-Pn) belongs to one cluster (105), and the predetermined number is not greater than a total number of processor cores in the one cluster,
wherein the one cluster (105) is one of a plurality clusters that have a heterogeneous multiprocessing, HMP, structure; or
wherein the one cluster (105) is one of a plurality clusters that have a symmetric multiprocessing, SMP, structure, where operating frequencies of processor cores (P1-Pn) in each of the plurality of clusters are independent of one another; or
wherein the total number of active processor cores (P1-Pn) belongs to a plurality of clusters (105), and the predetermined number is not greater than a total number of processor cores (P1-Pn) in the system (100),
wherein the plurality of clusters (105) have an SMP structure, where operating frequencies of processor cores (P1-Pn) in each of the plurality of clusters are dependent on one another, or
wherein processor cores in each of the one or more clusters (105) have a same processor type or different processor types.

13. The system of one of claims 10 to 12, further comprising:
memory to store a look-up table (310, 410) that contains one or more frequencies (F1-F(n+1)) higher than the specified frequency for each of a plurality of temperature ranges (T1-(>Tn)),
wherein the management module (130) is further operative to identify a frequency from the look-up table (310, 410) based on the ambient temperature measurement and operate the active cores (P3-Pn) at the frequency.

## Patentansprüche

1. Verfahren zum Betreiben eines Datenverarbeitungssystems (100) mit einem oder mehreren Clustern (105), wobei jeder Cluster (105) einen oder mehrere Prozessorkerne (P1-Pn) beinhaltet, Folgendes umfassend:
Detektieren eines Zustands, bei dem eine Gesamtzahl von aktiven Prozessorkernen (P3-Pn) in dem einen oder den mehreren Clustern (105) kleiner ist als eine vorbestimmte Anzahl und eine Betriebsfrequenz der aktiven Prozessorkerne (P3-Pn) auf eine spezifizierte Frequenz angestiegen ist;
Erhalten einer Umgebungstemperaturmessung des einen oder der mehreren Cluster (105); und
nach Detektieren des Zustands Erhöhen der Betriebsfrequenz über die spezifizierte Frequenz auf Basis der Umgebungstemperaturmessung, während ein selbes Versorgungsspannungsniveau zu den aktiven Prozessorkernen (P3-Pn) beibehalten wird;
wobei das Erhöhen der Betriebsfrequenz ferner das Erhöhen der Betriebsfrequenz derart umfasst, dass ein erhöhter Leistungsverbrauch infolge der erhöhten Betriebsfrequenz von einem IR-Abfall herrührt, der dadurch verursacht wird, dass sich mindestens ein inaktiver Prozessorkern (P1, P2) in dem einen oder den mehreren Clustern (105) befindet,
wobei
- die Gesamtzahl von aktiven Prozessorkernen (P3-Pn) zu einem Cluster (105) gehört und die vorbestimmte Anzahl nicht größer ist als eine Gesamtzahl von Prozessorkernen (P1-Pn) in dem einen Cluster (105) oder
- die aktiven Prozessorkerne (P3-Pn) zu einer Vielzahl von Clustern (105) im Datenverarbeitungssystem (100) gehören und die vorbestimmte Anzahl nicht größer ist als eine Gesamtzahl von Prozessorkernen (P1-Pn) im Datenverarbeitungssystem (100).

2. Verfahren nach Anspruch 1, wobei das Erhöhen der Betriebsfrequenz ferner auf der Gesamtzahl von aktiven Prozessorkernen (P3-Pn) in dem einen oder den mehreren Clustern (105) basiert.

3. Verfahren nach Anspruch 1 oder 2, wobei die spezifizierte Frequenz eine vorbestimmte Obergrenze für die Betriebsfrequenz ist, wenn alle Prozessorkerne (P1-Pn) in dem einen oder den mehreren Clustern (105) aktiv sind.

4. Verfahren nach einem der vorhergehenden Ansprüche, das ferner Folgendes umfasst:
Identifizieren von einer oder mehreren Frequenzen (F1-(>Fn)), die höher sind als die spezifizierte Frequenz, in einer Nachschlagetabelle (310, 410) auf Basis der Umgebungstemperaturmessung; und
Betreiben der aktiven Prozessorkerne (P3-Pn) mit der einen oder den mehreren Frequenzen (F1-(>Fn)).

5. Verfahren nach Anspruch 4, wobei das Identifizieren der einen oder der mehreren Frequenzen (F1-(>Fn)) ferner auf der Gesamtzahl von aktiven Prozessorkernen (P3-Pn) in dem einen oder den mehreren Clustern (105) basiert.

6. Verfahren nach einem der vorhergehenden Ansprüche, wobei das Erhöhen der Betriebsfrequenz ferner Folgendes umfasst:
Identifizieren eines Temperaturbereichs, zu dem die Umgebungstemperaturmessung gehört; und
Betreiben des aktiven Prozessorkerns (P3-Pn) mit einer Frequenz, die dem Temperaturbereich entspricht.

7. Verfahren nach einem der vorhergehenden Ansprüche, das ferner Folgendes umfasst:
Berechnen einer Größe einer Frequenzerhöhung auf Basis der Umgebungstemperaturmessung und
Erhöhen der Betriebsfrequenz um die Größe der Frequenzerhöhung.

8. Verfahren nach einem der vorhergehenden Ansprüche, wobei die spezifizierte Frequenz eine beliebige von einer oder mehreren spezifizierten Frequenzen einer Vielzahl von spezifizierten Frequenzen ist, wobei die Vielzahl von spezifizierten Frequenzen für alle Prozessorkerne (P1-Pn), die in dem einen oder den mehreren Clustern (105) aktiv sind, ausgelegt sind.

9. Verfahren nach Anspruch 8, wobei die spezifizierte Frequenz eine höchste spezifizierte Frequenz der Vielzahl von spezifizierten Frequenzen ist.

10. Datenverarbeitungssystem (100), das Folgendes umfasst:
einen oder mehrere Cluster (105), die eine Vielzahl von Prozessorkernen (P1-Pn) beinhalten;
einen Temperatursensor (140), um eine Umgebungstemperaturmessung des einen oder der mehreren Cluster (105) zu erhalten;
ein Verwaltungsmodul (130), das an den einen oder die mehreren Cluster (105) gekoppelt ist, um einen Zustand zu detektieren, bei dem eine Gesamtzahl von aktiven Prozessorkernen (P3-Pn) in dem einen oder den mehreren Clustern (105) kleiner ist als eine vorbestimmte Anzahl und eine Betriebsfrequenz der aktiven Prozessorkerne (P3-Pn) auf eine spezifizierte Frequenz angestiegen ist; und
eine Frequenzsteuerung (110), die an den einen oder die mehreren Cluster (105), den Temperatursensor (140) und das Verwaltungsmodul (130) gekoppelt ist, die nach der Detektion des Zustands betreibbar ist, die Betriebsfrequenz auf Basis der Umgebungstemperaturmessung über die spezifizierte Frequenz zu erhöhen, während ein selbes Versorgungsspannungsniveau zu den aktiven Prozessorkernen (P3-Pn) beibehalten wird,
wobei die Betriebsfrequenz derart erhöht wird, dass ein erhöhter Leistungsverbrauch infolge der erhöhten Betriebsfrequenz von einem IR-Abfall herrührt, der dadurch verursacht wird, dass sich mindestens ein inaktiver Prozessorkern (P1, P2) in dem einen oder den mehreren Clustern (105) befindet,
wobei
- die Gesamtzahl von aktiven Prozessorkernen (P3-Pn) zu einem Cluster (105) gehört und die vorbestimmte Anzahl nicht größer ist als eine Gesamtzahl von Prozessorkernen (P1-Pn) in dem einen Cluster (105) oder
- die aktiven Prozessorkerne (P3-Pn) zu einer Vielzahl von Clustern (105) im Datenverarbeitungssystem (100) gehören und die vorbestimmte Anzahl nicht größer ist als eine Gesamtzahl von Prozessorkernen (P1-Pn) im Datenverarbeitungssystem (100).

11. System nach Anspruch 10, wobei die Frequenzsteuerung (110) betreibbar ist, das Verfahren nach einem der Ansprüche 2 bis 8 durchzuführen.

12. System nach Anspruch 10 oder 11,
wobei die Gesamtzahl von aktiven Prozessorkernen (P3-Pn) zu einem Cluster (105) gehört und die vorbestimmte Anzahl nicht größer ist als eine Gesamtzahl von Prozessorkernen in dem einen Cluster,
wobei der eine Cluster (105) einer einer Vielzahl von Clustern ist, die eine heterogene Mehrfachverarbeitungs(HMP)-Struktur aufweisen; oder
wobei der eine Cluster (105) einer einer Vielzahl von Clustern ist, die eine symmetrische Mehrfachverarbeitungs(SMP)-Struktur aufweisen, wo Betriebsfrequenzen von Prozessorkernen (P1-Pn) in jedem der Vielzahl von Clustern voneinander unabhängig sind; oder
wobei die Gesamtzahl von aktiven Prozessorkernen (P1-Pn) zu einer Vielzahl von Clustern (105) gehört und die vorbestimmte Anzahl nicht größer ist als eine Gesamtzahl von Prozessorkernen (P1-Pn) im System (100),
wobei die Vielzahl von Clustern (105) eine SMP-Struktur aufweisen, wo Betriebsfrequenzen von Prozessorkernen (P1-Pn) in jedem der Vielzahl von Clustern voneinander unabhängig sind, oder
wobei Prozessorkerne in jedem des einen oder der mehreren Cluster (105) einen selben Prozessortyp oder verschiedene Prozessortypen aufweisen.

13. System nach einem der Ansprüche 10 bis 12, das ferner Folgendes umfasst:
Speicher zum Speichern einer Nachschlagetabelle (310, 410), die für jeden einer Vielzahl von Temperaturbereichen (T1-(>Tn)) eine oder mehrere Frequenzen (F1-F(n+1)) enthält, die höher sind als die spezifizierte Frequenz,
wobei das Verwaltungsmodul (130) ferner betreibbar ist, eine Frequenz auf Basis der Umgebungstemperaturmessung in der Nachschlagetabelle (310, 410) zu identifizieren und die aktiven Kerne (P3-Pn) mit der Frequenz zu betreiben.

## Revendications

1. Procédé d'exploitation d'un système informatique (100) présentant une ou plusieurs grappes (105), chaque grappe (105) incluant un ou plusieurs coeurs de processeur (P1-Pn), le procédé comprenant les étapes ci-dessous consistant à :
détecter une condition dans laquelle un nombre total de coeurs de processeur actifs (P3-Pn) au sein de ladite une ou desdites plusieurs grappes (105) est inférieur à un nombre prédéterminé, et une fréquence de fonctionnement des coeurs de processeur actifs (P3-Pn) a augmenté jusqu'à une fréquence spécifiée ;
obtenir une mesure de température ambiante de ladite une ou desdites plusieurs grappes (105) ; et
suite à la détection de la condition, augmenter la fréquence de fonctionnement au-delà de la fréquence spécifiée, sur la base de la mesure de température ambiante, tout en maintenant un même niveau de tension d'alimentation au niveau des coeurs de processeur actifs (P3-Pn) ;
dans lequel l'étape d'augmentation de la fréquence de fonctionnement consiste en outre à augmenter la fréquence de fonctionnement de sorte qu'une consommation d'énergie accrue due à la fréquence de fonctionnement accrue est le fait d'une chute de tension ohmique occasionnée par la présence d'au moins un coeur de processeur inactif (P1, P2) dans ladite une ou lesdites plusieurs grappes (105) ;
dans lequel :
- le nombre total de coeurs de processeur actifs (P3-Pn) appartient à une grappe (105), et le nombre prédéterminé n'est pas supérieur à un nombre total de coeurs de processeur (P1-Pn) dans ladite une grappe (105) ; ou
- les coeurs de processeur actifs (P3-Pn) appartiennent à une pluralité de grappes (105) dans le système informatique (100), et le nombre prédéterminé n'est pas supérieur à un nombre total de coeurs de processeur (P1-Pn) dans le système informatique (100).

2. Procédé selon la revendication 1, dans lequel l'étape d'augmentation de la fréquence de fonctionnement est en outre basée sur le nombre total de coeurs de processeur actifs (P3-Pn) dans ladite une ou lesdites plusieurs grappes (105).

3. Procédé selon la revendication 1 ou 2, dans lequel la fréquence spécifiée est une limite supérieure prédéterminée pour la fréquence de fonctionnement lorsque tous les coeurs de processeur (P1-Pn) dans ladite une ou lesdites plusieurs grappes (105) sont actifs.

4. Procédé selon l'une quelconque des revendications précédentes, comprenant en outre les étapes ci-dessous consistant à :
identifier une ou plusieurs fréquences (F1-(>Fn)) supérieures à la fréquence spécifiée, à partir d'une table de recherche (310, 410), sur la base de la mesure de température ambiante ; et
exploiter les coeurs de processeur actifs (P3-Pn) à ladite une ou auxdites plusieurs fréquences (F1-(>Fn)).

5. Procédé selon la revendication 4, dans lequel l'étape d'identification de ladite une ou desdites plusieurs fréquences (F1-(>Fn)) est en outre basée sur le nombre total de coeurs de processeur actifs (P3-Pn) dans ladite une ou lesdites plusieurs grappes (105).

6. Procédé selon l'une quelconque des revendications précédentes, dans lequel l'étape d'augmentation de la fréquence de fonctionnement comprend en outre les étapes ci-dessous consistant à :
identifier une plage de température à laquelle appartient la mesure de température ambiante ; et
exploiter le coeur de processeur actif (P3-Pn) à une fréquence correspondant à la plage de température.

7. Procédé selon l'une quelconque des revendications précédentes, comprenant en outre les étapes ci-dessous consistant à :
calculer une quantité d'augmentation de fréquence sur la base de la mesure de température ambiante ; et
augmenter la fréquence de fonctionnement de la quantité d'augmentation de fréquence.

8. Procédé selon l'une quelconque des revendications précédentes, dans lequel la fréquence spécifiée correspond à l'une quelconque parmi une ou plusieurs fréquences spécifiées d'une pluralité de fréquences spécifiées, dans lequel les fréquences de la pluralité de fréquences spécifiées sont configurées pour tous les coeurs de processeur (P1-Pn) qui sont actifs dans ladite une ou lesdites plusieurs grappes (105).

9. Procédé selon la revendication 8, dans lequel la fréquence spécifiée est une fréquence spécifiée la plus élevée de la pluralité de fréquences spécifiées.

10. Système informatique (100) comprenant :
une ou plusieurs grappes (105) incluant une pluralité de coeurs de processeur (P1-Pn) ;
un capteur de température (140) destiné à obtenir une mesure de température ambiante de ladite une ou desdites plusieurs grappes (105) ;
un module de gestion (130) couplé à ladite une ou auxdites plusieurs grappes (105) en vue de détecter une condition dans laquelle un nombre total de coeurs de processeur actifs (P3-Pn) au sein de ladite une ou desdites plusieurs grappes (105) est inférieur à un nombre prédéterminé, et une fréquence de fonctionnement des coeurs de processeur actifs (P3-Pn) a augmenté jusqu'à une fréquence spécifiée ; et
un contrôleur de fréquence (110) couplé à ladite une ou auxdites plusieurs grappes (105), au capteur de température (140) et au module de gestion (130), lequel, suite à la détection de la condition, est exploitable de manière à augmenter la fréquence de fonctionnement au-delà de la fréquence spécifiée, sur la base de la mesure de température ambiante, tout en maintenant un même niveau de tension d'alimentation au niveau des coeurs de processeur actifs (P3-Pn) ;
dans lequel l'augmentation de la fréquence de fonctionnement consiste à augmenter la fréquence de fonctionnement de sorte qu'une consommation d'énergie accrue due à la fréquence de fonctionnement accrue est le fait d'une chute de tension ohmique occasionnée par la présence d'au moins un coeur de processeur inactif (P1, P2) dans ladite une ou lesdites plusieurs grappes (105) ;
dans lequel :
- le nombre total de coeurs de processeur actifs (P3-Pn) appartient à une grappe (105), et le nombre prédéterminé n'est pas supérieur à un nombre total de coeurs de processeur (P1-Pn) dans ladite une grappe (105) ; ou
- les coeurs de processeur actifs (P3-Pn) appartiennent à une pluralité de grappes (105) dans le système informatique (100), et le nombre prédéterminé n'est pas supérieur à un nombre total de coeurs de processeur (P1-Pn) dans le système informatique (100).

11. Système selon la revendication 10, dans lequel le contrôleur de fréquence (110) est exploitable de manière à mettre en oeuvre le procédé selon l'une quelconque des revendications 2 à 8.

12. Système selon la revendication 10 ou 11,
dans lequel le nombre total de coeurs de processeur actifs (P3-Pn) appartient à une grappe (105), et le nombre prédéterminé n'est pas supérieur à un nombre total de coeurs de processeur dans ladite une grappe ;
dans lequel ladite une grappe (105) correspond à l'une d'une pluralité de grappes présentant une structure multiprocesseur hétérogène, HMP ; ou
dans lequel ladite une grappe (105) correspond à l'une d'une pluralité de grappes présentant une structure multiprocesseur symétrique, SMP, où des fréquences de fonctionnement de coeurs de processeur (P1-Pn) dans chaque grappe de la pluralité de grappes sont indépendantes les unes des autres ; ou
dans lequel le nombre total de coeurs de processeur actifs (P1-Pn) appartient à une pluralité de grappes (105), et le nombre prédéterminé n'est pas supérieur à un nombre total de coeurs de processeur (P1-Pn) dans le système (100) ;
dans lequel la pluralité de grappes (105) présente une structure SMP, où les fréquences de fonctionnement de coeurs de processeur (P1-Pn) dans chaque grappe de la pluralité de grappes sont dépendantes les unes des autres ; ou
dans lequel les coeurs de processeur dans chaque grappe de ladite une ou desdites plusieurs grappes (105) présentent un même type de processeur ou des types de processeurs différents.

13. Système selon l'une quelconque des revendications 10 à 12, comprenant en outre :
une mémoire destinée à stocker une table de recherche (310, 410) qui contient une ou plusieurs fréquences (F1-F(n+1)) supérieures à la fréquence spécifiée pour chacune d'une pluralité de plages de température (Tl-(>Tn)),
dans lequel le module de gestion (130) est en outre exploitable de manière à identifier une fréquence, à partir de la table de recherche (310, 410), sur la base de la mesure de température ambiante, et à faire fonctionner les coeurs de processeur actifs (P3-Pn) à ladite fréquence.
